# EUROPEAN PATENT SPECIFICATION

(11) **EP 2 700 344 B1**
(45) Date of publication and mention of the grant of the patent: **15.04.2015**
(21) Application number: 12397522.9
(22) Date of filing: 22.08.2012
(51) Int. Cl.: F16D 41/20, F16D 7/02, A47K 10/34, A47K 10/36

(54) **Paper dispenser having a one-way spring clutch**
Papierspender mit einer Einweg-Federkupplung
Distributeur de papier ayant un embrayage à ressort unidirectionnel

(43) Date of publication of application: 26.02.2014
(73) Proprietor: Achton A/S, 4540 Fårevejle (DK)
(72) Inventor: Achton, Kim, 4540 Farevejle (DK)
(74) Representative: Langenskiöld, Tord Karl Walter

(56) References cited:
- US-A1- 2011 133 019

## Description

### Field of the Invention

The present invention relates to paper dispensers. More specifically, the present invention relates to paper dispensers having a turn-knob for manually rotating a mechanism dispensing paper web from a paper supply.

### Prior Art

Paper dispensers having a dispensing mechanism with a dispensing drum are well known in the art. Document US2011/0133019 A1 discloses a paper dispenser having the features of the preamble of claim 1.

A dispensing drum commonly both feeds and cuts paper web into sheets and may be actuated in various ways, such as manually using a turn knob, with an electric motor or by using a spring loaded mechanism activated by a user pulling on a tail of the paper. The dispensing drum holds a cutting knife which rapidly extends from the drum, thus cutting the paper running along the periphery of the drum. Conventionally each revolution of the dispensing drum corresponds to the length of a paper sheet, so that the cutting knife is extended and retracted once per each revolution. The dispensing drum is often also a driving element, meaning that its pulls paper from the paper supply and feeds it further to a user.

Such kinds of paper dispensers are commonly equipped with a turn knob for manually rotating the dispensing drum, even if the dispensing drum is primarily actuated by other means. Rotating the dispensing drum manually may be necessary in the event of an unwanted tear of the paper, particularly in the case that the dispensing drum is primarily actuated by a user pulling on the tail of the paper. Another situation where the dispensing drum has to be rotated manually is when a new paper roll is introduced to the dispenser and the paper web has to be threaded through the dispensing mechanism.

To avoid misuse, a turn knob is often coupled to the dispensing drum via a one-way clutch allowing the turn knob to be rotated in only one direction. Rotating the dispensing drum in the wrong direction can cause the paper web to unthread from the dispensing mechanism or even damage the dispensing mechanism, depending on its structure. Also, equipping the turn knob with a one-way clutch makes threading the dispensing mechanism more simple to the operator replacing a new paper roll to the dispenser as the turn knob can only be rotated in the correct direction. Common ways of implementing a one-way clutch are using a free wheel mechanism or a wrap spring clutch.

On the other hand, the dispensing drum might have to be rotated in an opposite direction during certain situations. For example, the paper web may have to pulled out from the inlet side of the dispensing mechanism in connection with replacing a paper roll. Occasionally, a paper blockage may also occur, and again, the paper web may have to be pulled out of the dispensing mechanism from the inlet side. To enable such an operation, the one-way clutch of a turn knob has to be releasable. With a gear and pawl type ratcheting freewheel releasing the one-way clutch can be done by simply turning the pawl outwards, but providing such a release operation has been problematic with wrap-spring type clutches.

A particular problem associated with paper dispensers intended for public sanitary facilities is that they must withstand a certain amount of rough handling or even mischief. Turn knobs equipped with one-way clutches have been discovered to be especially prone to breakage under excessive forces. When a one-way clutch mechanism breaks the whole dispenser often has to be replaced.

### Objects of the Invention

An object of the present invention is to overcome the above-identified problems associated with the dispensers of the prior art. A particular object is to provide a paper dispenser having a turn knob that can be freely rotated in one direction while rotation in another direction is blocked unless a force exceeding a certain amount is applied to the turn knob in said another direction.

This object is achieved by a dispenser according to the invention as described in the characterizing part of the accompanied claim 1. Further embodiments and objects of the present invention will come apparent from the dependent claims 2 to 4.

A paper dispenser according to the present invention overcomes the drawbacks without the need for complex and expensive one-way clutch mechanisms.

### Brief Description of the Drawing

The invention is described hereafter with reference to the following figures, where:
Fig. 1 shows a perspective view of a portion of a dispensing mechanism and a wrap-spring clutch according to an embodiment of the invention;
Fig. 2 illustrates a turn knob and a wrap-spring clutch according to an embodiment of the invention;

It should be noted that the above mentioned figures are illustrated in a simplified manner for the purpose of clarity.

### Detailed Description of the Invention

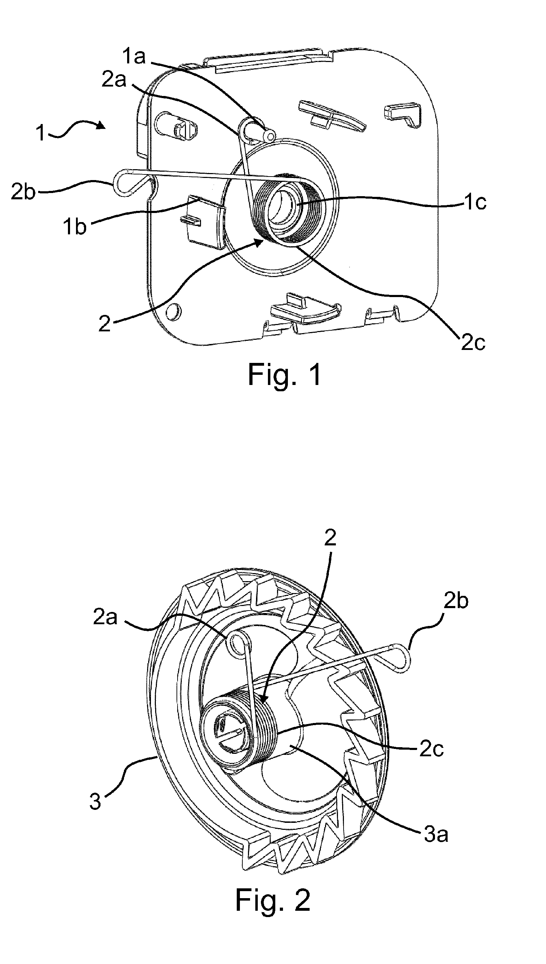

In Fig. 1 a side portion of a dispensing mechanism 1 of a paper dispenser and a wrap-spring clutch 2 can be seen. For illustrative purposes the rest of the paper dispenser is not shown in Fig. 1. A pin 1a and a stopper 1b protrude from the side portion of the dispensing mechanism 1, through which an axle 1c of a dispensing drum (not shown) extends. The wrap-spring clutch 2, having a first arm 2a and a second arm 2b extending from a central coil 2c, is illustrated in a position corresponding to a normal operation condition of the paper dispenser. However, it should be noted that in normal operation condition of the paper dispenser, the side portion of the dispensing mechanism 1 and the wrap-spring coil 2 would be at least partially covered by a turn knob or a housing, or both.

In Fig. 2 a perspective view of a turn knob 3 is illustrated. The turn knob 3 has an inner hub 3a, around which the coil 2c of the wrap spring clutch 2 is wrapped. In Fig. 2 the turn knob 3 is illustrated from a side facing the dispensing mechanism during operation of the paper dispenser.

A dispenser according to the present invention comprises a housing capable of holding at least one paper supply, such as a roll. Naturally, any paper supply providing a substantially continuous web can be used. A paper web is led from the paper supply via a dispensing mechanism 1 to be dispensed to a user through an opening in the housing. The dispensing mechanism 1 may also be used to cut the paper web in sheets prior to dispensing. In the dispensing mechanism 1, the paper web is led to run along a cylindrical circumference of a dispensing drum. As the dispensing drum is rotated, the paper web is pulled from the paper supply, into the dispensing mechanism 1 and fed towards the opening in the housing to be dispensed. Furthermore, the dispensing drum may be equipped with an extending and retracting cutting knife for cutting the paper web into sheets.

A turn knob 3 is directly connected to a center axle 1c of the dispensing drum for enabling manual rotation. Other arrangements, such as connecting the turn knob 3 to the dispensing drum via gears or belts, may also be used. According to an embodiment of the invention, the inside of an inner hub 3a locks rotationally onto the axle 1c extending axially from the dispensing drum's center axis, through the side portion of the dispensing mechanism 1. The wrap-spring clutch 2 is placed around the hub 3a. The inner diameter of the wrap-spring clutch's central coil 2c corresponds substantially to an outer diameter of said hub 3a, so that the wrap-spring clutch 2 fits tightly onto the inner hub 3a. Extending from the wrap-spring clutch 2, the first arm 2a is attached to a stationary point. In an embodiment according to Fig.1 the end of the first arm 2a is bent to form a loop, which is wrapped around the pin 1a on the dispensing mechanism. Naturally, the first arm 2a could be attached to another stationary point, such as the housing.

The wrap-spring clutch 2 and its first arm 2a are arranged so that when the turn knob 3 is rotated to turn the dispensing drum in the direction of its typical operation, the wrap-spring clutch 2 strives to rotate along with the turn knob 3. However, the first arm 2a being attached to the pin 1a, causes the first arm 2a to pushed against the pin 1a when turn knob is rotated. This prevents the wrap-spring clutch 2 from rotating along with the turn knob 3, and further exerts a force on the first arm 2a causing the wrap-spring clutch 2 to slightly unwind, thus allowing the turn knob 3 and the dispensing drum to rotate freely in a first direction. Consequently, when the turn knob 3 is rotated to turn the dispensing drum in a second direction, i.e. in a direction opposite to the first direction, the stationary first arm 2a exerts a force causing the wrap spring clutch 2 to tighten around the inner hub 3a. As the wrap spring clutch 2 tightens, the amount of force required to rotate the turn knob 3 and the dispensing drum in the second direction becomes increasingly larger, thus effectively preventing the turn knob 3 and the dispensing drum from being rotated. Due to the resilient nature of the wrap-spring clutch 2, there is a small backlash before the turn knob 3 and the dispensing drum are prevented from being rotated. But as stated above, the amount of force required to rotate the turn knob 3 and the dispensing drum in the second direction increases during this backlash.

On the other side of the wrap-spring clutch 2, opposite to the first arm 2a, there is a second arm 2b extending from the wrap-spring's coil 2c. A stationary stopper 1b is arranged along the rotational travel path of the second arm 2b in the second direction. The stopper 1b may be attached to the dispensing mechanism 1 or the housing, for example. When the turn knob 3 and the dispensing drum are rotated in the second direction, the second 2b arm rotates along with the wrap-spring clutch 2 during the backlash movement until it coincides with the stopper 1b. At this point, the second arm 2b pushes against the stopper 1b and prevents the wrap-spring clutch 2 from tightening further around the inner hub 3a. This arrangement effectively limits the amount of force required to rotate the turn knob 3 and the dispensing drum in the second direction. The amount of force required to rotate the knob 3 and the dispensing drum in the second direction should be sufficiently large enough to prevent undesirable rotation in said second direction, yet small enough not to cause breakage of any components, such as the pin 1a. The stopper 1b should be located along the travel path of the second arm 2b in the second direction at such a distance that the amount of force required to rotate the turn knob 3 and the dispensing drum is as described above.

In an embodiment according to the invention, the second arm 2b extends outside the periphery of the turn knob 3, suitably between said turn knob 3 and the dispensing mechanism 1. This arrangement enables the second arm 2b to be pushed in the first direction, thus slightly unwinding the wrap-spring clutch 2 and temporarily further reducing the amount of force required to rotate the turn knob 3 and the dispensing drum in the second direction. When the second arm 2b is no longer pushed in the second direction it automatically returns to its previous position due to the resilient nature of the wrap-spring clutch 2. Such functionality is especially suitable when the paper web has to be pulled out from the inlet side of the dispensing mechanism 1 during paper supply replacement. Advantageously, the dispensing mechanism 1 or the housing is equipped with a pin or a notch for holding the second arm 2b in a released position as described above.

In a further embodiment of the invention, the dispensing mechanism 1, the wrap-spring clutch 2, the turn knob 3 and the housing of the paper dispenser are arranged so that when the paper dispenser is in a normal operation condition, i.e. the housing is closed, the wrap spring clutch 2, namely its second arm 2b, is located within the housing while the turn knob is located outside the housing. This enables the paper dispenser to be operated manually using the turn knob 3 while access to the second arm 2b is restricted only to people being able to open the housing, such as maintenance personnel.

## Claims

1. A paper dispenser comprising:
a housing holding at least one paper supply;
a dispensing mechanism (1) within said housing for cutting and dispensing paper sheets from said at least one paper supply, said dispensing mechanism (1) having a rotatable dispensing drum;
a turn knob (3) coupled with said dispensing drum for enabling manual rotation, said turn knob (3) having an inner hub (3a) extending axially towards said dispensing mechanism (1);
a wrap-spring clutch (2) wrapped around the inner hub (3a) of said turn knob (3), said wrap-spring clutch (2) having a first arm (2a) extending from it and being attached to a stationary point (1a) for enabling free rotation of said turn knob in a first rotation direction by causing said wrap-spring clutch (2) to slightly unwind when said turn knob (3) is rotated in said first direction,
**characterized in that** the wrap-spring clutch (2) comprises a second arm (2b) extending from it, a stopper (1b) being located in the second arm's (2b) rotational travel path in a second rotation direction for enabling the turn knob (3) to be rotated in said second direction against a limited braking force exerted on said inner hub (3a) by said wrap-spring clutch (2) tightening around said inner hub (3a).

2. A paper dispenser according to claim 1, wherein the second arm (2b) of said wrap-spring clutch (2) extends outside the periphery of said turn knob (3).

3. A paper dispenser according to claim 1 or 2, wherein a notch or a pin is provided for holding the second arm (2b) of said wrap-spring clutch (2) in a displaced position in the first rotational direction

4. A paper dispenser according to any of the preceding claims, wherein the second arm (2b) of said wrap-spring clutch (2) is located within said housing while said turn knob (3) is located outside said housing when said housing is closed.

## Patentansprüche

1. Papierspender mit:
einem Gehäuse, das mindestens einen Papiervorrat enthält;
einem im Innern des Gehäuses angeordneten Abgabemechanismus (1) zum Zuschneiden und Abgeben von Papierblättern aus dem mindestens einen Papiervorrat, wobei der Abgabemechanismus (1) eine drehbare Abgabetrommel hat;
einem mit der Abgabetrommel gekoppelten Drehknopf (3) zum Ermöglichen einer manuellen Drehung, wobei der Drehknopf (3) eine Innennabe (3a) aufweist, die sich axial zu dem Abgabemechanismus (1) erstreckt;
einer um die Innennabe (3a) des Drehknopfs gewickelten Wickelfederkupplung (2), wobei sich von der Wickelfederkupplung (2) aus ein erster Arm (2a) erstreckt, der an einem stationären Punkt (1a) befestigt ist, um eine freie Drehung des Drehknopfs in eine erste Drehrichtung zu erlauben, wenn durch geringfügiges Entspannen (Abwickeln der Wicklung) der Wickelfederkupplung (2) der Drehknopf (3) in die erste Richtung gedreht wird,
**dadurch gekennzeichnet, dass** sich von der Wickelfederkupplung (2) aus ein zweiter Arm (2b) erstreckt, wobei ein Stopper (1b) in der Drehstrecke des zweiten Arms (2b), die einer zweiten Drehrichtung entspricht, angeordnet ist, um dem Drehknopf (3) eine Drehung in die zweite Richtung gegen eine begrenzte Bremskraft zu erlauben, die von der sich fester um die Innennabe (3a) spannenden Wickelfederkupplung (2) auf die Innennabe (3a) ausgeübt wird.

2. Papierspender nach Anspruch 1, wobei sich der zweite Arm (2b) der Wickelfederkupplung (2) über den Außenrand des Drehknopfs (3) hinaus erstreckt.

3. Papierspender nach Anspruch 1 oder 2, wobei eine Kerbe oder ein Zapfen bereitgestellt ist, um in der ersten Drehrichtung den zweiten Arm (2b) der Wickelfederkupplung (2) in einer versetzten Position zu halten.

4. Papierspender nach einem der vorstehenden Ansprüche, wobei der zweite Arm (2b) der Wickelfederkupplung (2) im Innern des Gehäuses angeordnet ist, während der Drehknopf (3) außerhalb des Gehäuses angeordnet ist, wenn das Gehäuse geschlossen ist.

## Revendications

1. Distributeur de papier comprenant :
un logement contenant au moins une source de papier ;
un mécanisme de distribution (1) à l'intérieur dudit logement afin de couper et de distiibuer des feuilles de papier à partir de ladite au moins une source de papier, ledit mécanisme de distribution (1) comportant un tambour de distribution pouvant tourner ;
un bouton tournant (3) couplé audit tambour de distribution afin de permettre la rotation manuelle, ledit bouton tournant (3) comportant un moyeu interne (3a) s'étendant axialement vers ledit mécanisme de distribution (1) ;
un embrayage à ressort enroulé (2) enroulé autour du moyeu interne (3a) dudit bouton tournant (3), ledit embrayage à ressort enroulé (2) comportant un premier bras (2a) s'étendant à partir de ce dernier et fixé sur un point fixe (1a) afin de permettre la rotation libre dudit bouton tournant dans un premier sens de rotation en provoquant un léger déroulement dudit embrayage à ressort enroulé (2) lorsque ledit bouton tournant (3) est tourné dans un premier sens,
**caractérisé en ce que** l'embrayage à ressort enroulé (2) comprend un second bras (2b) s'étendant à partir de ce dernier, un élément d'arrêt (1b) étant situé sur le trajet de déplacement en rotation du second bras (2b) dans un second sens de rotation afin de permettre la rotation du bouton tournant (3) dans ledit second sens contre l'effet d'un effort de freinage limité exercé sur ledit moyeu interne (3a) par ledit embrayage à ressort enroulé (2) assurant le serrage autour dudit moyeu interne (3a).

2. Distributeur de papier selon la revendication 1, dans lequel le second bras (2b) dudit embrayage à ressort enroulé (2) s'étend à l'extérieur de la périphérie dudit bouton tournant (3).

3. Distributeur de papier selon la revendication 1 ou 2, dans lequel une encoche ou une broche est agencée afin de maintenir le second bras (2b) dudit embrayage à ressort enroulé (2) dans une position décalée suivant le premier sens de rotation.

4. Distributeur de papier selon l'une quelconque des revendications précédentes, dans lequel le second bras (2b) dudit embrayage à ressort enroulé (2) est situé à l'intérieur dudit logement alors que ledit bouton tournant (3) est situé à l'extérieur dudit logement lorsque ledit logement est fermé.
